# EUROPEAN PATENT APPLICATION

(11) **EP 2 628 666 A1**
(43) Date of publication of application: **21.08.2013**
(21) Application number: 13155185.5
(22) Date of filing: 14.02.2013
(51) Int. Cl.: B62D 53/10

(54) **Fifth wheel remote locking system**

(30) Priority: 14.02.2012 GB 201202465
(71) Applicant: Montgomery Transport Limited, Newtonabbey, Antrim BT36 8RF (GB)
(72) Inventor: McCord, Paul, Ballymena, Antrim BT42 3DF (GB)
(74) Representative: Wallace, Alan Hutchinson

(57) **Abstract**

A fifth wheel coupling device comprising a latching mechanism operable into and out of a latching state, and a locking system. The locking system comprises a locking device for locking the latching mechanism in a latched state, and wireless communication means for communicating wirelessly with a user device, for example a mobile telephone. The locking system is activatable in responsive to a signal received wirelessly from the user device to operate said locking device.

## Description

### Field of the Invention

The present invention relates to locking systems, particularly for vehicles, especially tractor and trailer couplings.

### Background to the Invention

Tractor and trailer units are often releasably interconnected by a coupling known as a fifth wheel. Typically the fifth wheel comprises a socket for receiving the kingpin of the trailer, and a mechanical latching device for releasably holding the kingpin in the socket. The mechanical latching device is usually operable manually.

Conventional fifth wheels can readily be unlatched to allow the trailer to be de-coupled and this has led to an increasing problem with the theft of trailers. Providing a conventional lock for the latching mechanism does not solve this problem since a driver can be coerced into unlocking the mechanism.

It would be desirable therefore to provide an improved locking mechanism for a fifth wheel, especially which cannot easily be released by a driver under coercion.

### Summary of the Invention

A first aspect of the invention provides a locking system for a coupling, especially but not exclusively for a vehicle coupling, the coupling including a latching mechanism operable into and out of a latching state, the locking system comprising: a locking device co-operable with said latching mechanism to lock it in its latched state; wireless communication means for communicating wirelessly with at least one wirelessly enabled user device; and activation means responsive to at least one signal received wirelessly from said at least one user device in use to operate said locking device.

In preferred embodiments, said wireless communication means comprises means for communicating with said at least one user device across a telecommunications network, especially a mobile (cellular) telecommunications network, for example a mobile telephone network and/or a mobile data network. Conveniently, said wireless communications means comprises a GSM receiver or, preferably, a GSM transceiver.

Said at least one user device may comprise one or more mobile (cellular) telephone or mobile, e.g. handheld, computing device and/or other telephone or computer.

Said activation means may be responsive to data, for example comprising one or more activation code or message, conveyed by said at least one received signal. Alternatively, said activation means may be responsive to receipt of a valid signal from said at least one user device independently of any data conveyed by said signal. In preferred embodiments, said activation device is responsive to signals received from one or more authorised user devices and to this end may be configured to recognise said one or more authorised user devices, for example by means of their telephone number, caller ID or other unique identifier. The activation means may be configured to send at least one signal to one or more of said user devices, said signal indicating whether said locking device is locked or unlocked.

Optionally, said system may include a global positioning device, for example a GPS receiver or transceiver substantially co-located with said locking device. Said activation means may be configured to operate said locking device, or at least only to allow said locking device to be unlocked, only upon determining from said global positioning device that it is at an authorised location.

The locking device typically includes a locking pin, or other locking member, actuatable into and out of a locking state by an actuator, for example a ram. Conveniently, the actuator is pneumatically operable, but may be alternatively powered, e.g. hydraulically or electrically. The activation means may include or be co-operable with means for operating the actuator.

In preferred embodiments, said coupling is of a type commonly known as a fifth wheel and comprises a body shaped to define a socket for receiving a kingpin or other male coupling member, said latching mechanism being operable into and out of a blocking state in which it prevents said kingpin from being decoupled.

A second aspect of the invention provides a coupling, especially a fifth wheel coupling, comprising the locking system of the first aspect of the invention. Typically, the activation means, wireless communication means and the locking device are located on the coupling.

A third aspect of the invention provides a vehicle comprising a tractor unit and a trailer, and/or first and second trailers, releasably coupled by the coupling of the second aspect of the invention. Typically, the activation means, wireless communication means and the locking device are located on the coupling, but may alternatively be located elsewhere on the tractor unit or trailer.

Further advantageous aspects of the invention will become apparent with those ordinarily skilled in the art upon review of the following description of a specific embodiment and with reference to the accompanying drawings.

### Brief Description of the Drawings

An embodiment of the invention is now described by way of example and with reference to the accompanying drawings in which:

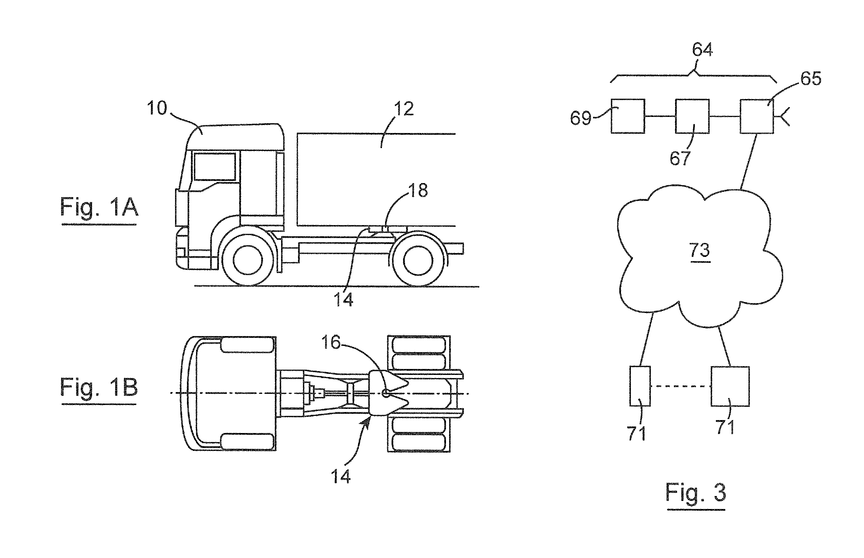

Figure 1A shows a side view of a tractor unit coupled to a trailer unit by a coupling comprising a fifth wheel;
Figure 1B shows a plan view of the tractor unit of Figure 1A;
Figure 2 illustrates a fifth wheel coupling embodying one aspect of the present invention; and
Figure 3 is a schematic diagram of an activation device forming part of a locking system embodying one aspect of the present invention, the activation device being in communication with remote devices via a telecommunications network.

### Detailed Description of the Drawings

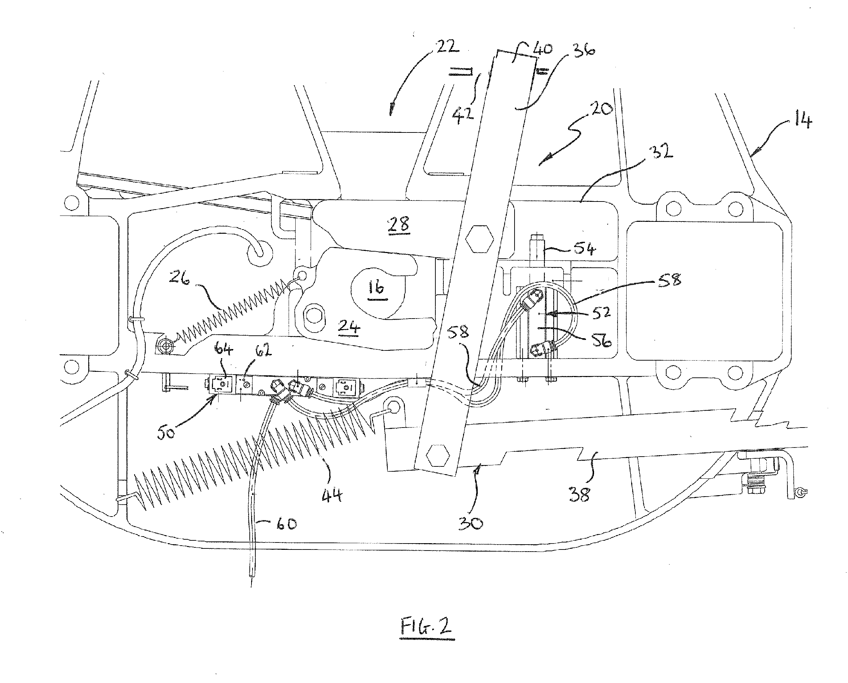

Referring now the drawings there is shown, a tractor unit 10 coupled to a trailer 12 by a coupling. The coupling comprises a coupling device 14 which is of the type commonly known as a fifth wheel. The fifth wheel 14 is provided on the tractor 10, although in alternative embodiments may be provided on a trailer to provide a trailer-to-trailer coupling. The fifth wheel 14 has a body that is shaped to define a socket 16 for receiving a kingpin 18 of the trailer 12. The fifth wheel 14 includes a latching mechanism 20 (Figure 2) for releasably securing the kingpin 18 in the socket 16. The term "fifth wheel" as used herein is intended to embrace any releasable couplings that may be used to provide tractor-to-trailer or trailer-to-trailer couplings.

Referring in particular to Figure 2, the latching mechanism 20 is described in more detail. The body of the fifth wheel 14 is shaped to define a channel 22 leading to the socket 16. The latching mechanism 20 comprises one or more jaw 24 that is movable between a latching state (as shown in Figure 2) and a non-latching state (not illustrated) in which it opens to the channel 22 to receive the kingpin 18. In the present example the jaw 24 is pivotable between its latching and non-latching states. In the illustration of Figure 2, the jaw 24 pivots through approximately 90° anti-clockwise when moving from the latched state to the non-latched state. Typically the jaw 24 is resiliently biased to adopt the non-latching state. For example, one or more springs 26 or other resilient biasing means may be provided for this purpose.

A blocking member 28 is movable into and out of a state in which it holds the jaw 24 in its latching state (as illustrated in Figure 2). When the blocking member 28 is in the position shown in Figure 2, the jaw 24 is prevented from pivoting under the bias of spring 26 into its non-latching state. The blocking member 28 is coupled to a linkage 30, the linkage 30 being operable to move the blocking member 28 into and out of its blocking state. In this example, the blocking bar 28 is slidable in a linear track 32 for substantially linear movement between its blocking and non-blocking states. The linkage 30 comprises first linkage member 36 pivotably coupled to the blocking member 28 and a second linkage member 38 pivotably coupled to the first linkage member 36. The second linkage member 38 typically has a handle (not shown) accessible by an operator to allow the linkage member 38 to be pushed and pulled manually (although in typical embodiments the linkage mechanism 30 is resiliently biased as described below and may not need to be manually operated in at least one of its directions of operation). In the illustrated embodiment movement of the second linkage member 38 in a direction from left to right pulls the first linkage member 36 and consequently the blocking member 28 to the right (a free end 40 of the first linkage member 36 being constrained by an aperture 42) to the extent that the blocking member 28 is moved out of its blocking state. Typically the linkage mechanism is resiliently biased to cause the blocking member 28 to adopt its blocking state. For example one or more springs 44 or other resilient biasing means may be provided for this purpose, e.g. acting on the second linkage member 38. In this case the member 38 does not need to be pushed manually from right to left as viewed in Figure 2.

A locking system is provided for locking the latching mechanism 20 in its latched state, thereby preventing the kingpin from being decoupled. The locking system is incorporated into the fifth wheel 14 and comprises a control unit 50 and a locking device 52. Advantageously, the locking device 52 is co-operable with a GSM unit, or other telecommunications device, as described in more detail hereinafter. The locking device 52 conveniently comprises a locking member in the preferred form of a pin 54 that is movable into and out of a locking state (as shown in Figure 2) in which it prevents the blocking member 28 from being moved out of its blocking state. Conveniently, the locking device 52 is positioned and arranged such that the blocking pin 54 projects into the track 32, typically in the path of the blocking member 28. The locking device 32 may be mounted on or otherwise incorporated into the body of the fifth wheel in any convenient manner. The locking device 52 comprises an actuator 56 for moving the pin 54 into the out of its locking state. Conveniently the actuator 56 comprises a pneumatic actuator, although other forms of actuator, e.g. hydraulically powered or electrically powered, may alternatively be used.

The control unit 50 comprises control means for operating the locking device 52 and as such is appropriately connected to the locking device 52. In this case, a respective pneumatic line 58 is connected from the extend side and retract side of the actuator 56 to a respective pneumatic port in the control unit. A pneumatic feed line 60 is connected to the control unit 50 and connectable to an air supply (not shown) or other fluid source as applicable. The control means is arranged to selectively connect the fluid lines 58 to the fluid supply 60 in order to effect the desired operation of the locking device 52, i.e. to extend or retract the pin 54 into or out of its locking state. The control means conveniently includes a valve 62, for example the solenoid valve, operable to selectively connect the fluid lines 58 to the supply line 60 as required to effect operation of the locking device. The control unit 50 further includes an activation device 64 for activating the control means to operate the locking device 52. In particular, in the illustrated embodiment the activation device 64 operates the solenoid valve 62 to move the locking pin 54 into and out of its locking state as required. The activation device 64 comprises wireless communication means (not visible in Figure 2) to allow the activation device 64 to communicate wirelessly with remote devices 71 via a telecommunications network 73. In particular, the activation device 64 is responsive to received wireless signals to cause the locking device to be operated in accordance with the received signals. To this end, the activation device 64 may include any suitable wireless receiver or transceiver 65, for example an RF or Bluetooth receiver/transceiver. The activation device 64 typically also includes a suitably programmed controller 67 (e.g. comprising a microprocessor, microcontroller or other processor/logic device) configured to receive activation signals from the wireless receiver/transceiver and, if appropriate, to cause the locking device 52 to operate. For example, the programmable controller of the activation device 64 may be programmed to produce an output signal for operating the valve 62.

In preferred embodiments, the activation device 64 is configured and equipped to receive (and optionally also to send) signals via a mobile (cellular) telephone network and/or mobile data communications network. For example, activation device 64 may be GSL enabled. To this end the activation device 64 comprises any suitable mobile (cellular) communications transceiver or receiver. Optionally, the locking system includes or is co-operable with a global positioning device 69 for example a GPS device, e.g. a GPS receiver. Conveniently the global positioning device is provided in the control unit 50. It will be understood however that the global positioning device and/or the activation device 64 need not necessarily be provided on the control unit 50 and may be provided elsewhere on the fifth wheel 14 or even on the tractor unit 10, and may be connected by respective wired or wireless links as is convenient to the control unit 50.

In preferred embodiments, the activation device 64 is configured to recognise at least one mobile (cellular) telephone number or other sender device ID and to be responsive only to signals received from authorised remote devices, as determined by their mobile (cellular) number or other sender ID. The activation device 64 may be responsive directly to signals received from recognised remote devices and/or to data included in any such received signals. In the case where the activation device 64 is responsive directly to a received signal it may be configured to cause the locking device 62 to toggle between its locked and non locked states upon receipt of successive signals from one or more recognised remote devices. Alternatively, it may be configured to cause the locking device to unlock upon receipt of a signal from a first set of one or more remote devices and to lock upon receipt of a signal from a second set of one or more recognised remote devices. In the case where the activation device 64 is responsive to data contained within a received signal, the data may be a simple message corresponding to lock or unlock, or may be a code which the activation device 64 is programmed to recognise. In the case where the remote device 71 is a mobile (cellular) telephone communicating across a mobile telephone communications network the received signals may comprise a telephone call, a text message (e.g. SMS) or any other mobile telephone communication. In the case where a mobile device 71 is a computing device sending a signal over a mobile data network, the signal may comprise an e-mail or any other electronic message.

In embodiments where the locking system includes a global positioning device, the activation device may be programmed to cause the locking device to unlock only if it determines from the global positioning device that it (and therefore the tractor 10 and trailer 12) are in one or more authorised locations. Advantageously this feature is used in conjunction with the receipt of signals from remote mobile devices.

In preferred embodiments the activation device 64 is configured and equipped to send signals to remote devices via a mobile telecommunications network (e.g. data network and/or telephone network) in order to inform one or more remote devices of, for example, the state of the locking device 52 i.e. whether it is locked or unlocked.

The activation device 64 may be responsive to signals received from one or more recognisable remote devices to change codes and/or global positions in response to which it will cause the locking device to operate, and in particular to open.

In use, a user can operate the locking system using an authorised (i.e. recognisable to the activation device 64) mobile device such as a telephone or portable computing device, and/or a desktop computer via a mobile telecommunications or data network as applicable. In preferred embodiments, the user sends a message to the activation device that contains an activation code for causing the locking system to lock or unlock as desired. Because the preferred arrangement is such that the activation device 64 only accepts commands from recognised remote devices, it will not respond to valid activation codes received from non-recognised devices. In a preferred mode of use, activation codes may be withheld from the driver of the tractor until a suitable occasion arises for decoupling the trailer.

The invention is not limited to the embodiments described herein which may be modified or varied without departing from the scope of the invention.

## Claims

1. A fifth wheel coupling device comprising a latching mechanism operable into and out of a latching state, and a locking system, the locking system comprising: a locking device co-operable with said latching mechanism to lock said latching mechanism in a latched state; wireless communication means for communicating wirelessly with at least one wirelessly enabled user device; and activation means responsive to at least one signal received wirelessly from said at least one user device in use to operate said locking device.

2. A coupling device as claimed in claim 1, wherein said wireless communication means comprises means for communicating with said at least one user device across a telecommunications network.

3. A coupling device as claimed in claim 2, wherein said wireless communication means comprises means for communicating with said at least one user device across a mobile (cellular) telecommunications network, for example a mobile telephone network and/or a mobile data network.

4. A coupling device as claimed in any preceding claim, wherein said wireless communications means comprises a GSM receiver, preferably a GSM transceiver.

5. A coupling device as claimed in any preceding claim, wherein said activation means is responsive to data conveyed by said at least one received signal, wherein said data preferably comprises one or more activation code or message.

6. A coupling device as claimed in any preceding claim, wherein said activation means is responsive to receipt of a valid signal from said at least one user device independently of any data conveyed by said signal.

7. A coupling device as claimed in any preceding claim, wherein said activation device is configured to recognise one or more authorised user devices and is responsive only to recognised authorised user devices.

8. A coupling device as claimed in claim 7, wherein said activation device is configured to recognise one or more authorised user devices by data associated with said at least one signal received wirelessly from said one or more authorised user device, wherein said associated data preferably comprises a telephone number, caller ID or other unique identifier.

9. A coupling device as claimed in any preceding claim, wherein said activation means is configured to send at least one signal to one or more of said user devices, said signal indicating whether said locking device is locked or unlocked.

10. A coupling device as claimed in any preceding claim, including a global positioning device, for example a GPS receiver or transceiver, and wherein said activation means is configured to operate said locking device, or to allow said locking device to be unlocked, only upon determining from said global positioning device that said coupling is at an authorised location.

11. A coupling device as claimed in any preceding claim, wherein the locking device comprises a locking locking member actuatable into and out of a locking state by an actuator.

12. A coupling device as claimed in any preceding claim, comprising a body shaped to define a socket for receiving a male coupling member, for example a kingpin, said latching mechanism being operable into and out of said latched state in which it prevents said coupling member from being decoupled from the body.

13. A coupling device as claimed in claim 12, wherein said locking mechanism is operable into and out of a locked state in which it prevents said latching mechanism from being operated out of the latched state.

14. A vehicle comprising a tractor unit and a trailer releasably coupled by the coupling device of claim 1.

15. A vehicle comprising first and second trailers releasably coupled by the coupling device of claim 1.
